# EUROPÄISCHE PATENTANMELDUNG

(11) **EP 0 980 812 A1**
(43) Veröffentlichungstag der Anmeldung: **23.02.2000**
(21) Anmeldenummer: 99113100.4
(22) Anmeldetag: 07.07.1999
(51) Int. Cl.: B62B 9/00, B60B 37/10

(54) **Kinderwagen-Fahrgestell**

(30) Priorität: 20.08.1998 DE 29814957 U
(71) Anmelder: BRITAX-TEUTONIA KINDERWAGENFABRIK GmbH, D-32120 Hiddenhausen (DE)
(72) Erfinder: Weigel, Klaus, 32130 Enger (DE)
(74) Vertreter: Stracke, Alexander, Dipl.-Ing.

(57) **Zusammenfassung**

Ein Kinderwagen-Fahrgestell mit zwei parallel und im Abstand zueinander stehenden Radachsen, auf denen in den Endbereichen die Laufräder frei drehbar gelagert sind und bei dem ggf. in Bohrungen der Felgen Lagerteile eingesetzt sind, soll so gestaltet werden, daß die Lagerungen wirksam gegen das Eindringen von Staub und Schmutzpartikeln und Feuchtigkeit geschützt sind.

Erfindungsgemäß sind zumindest an den inneren, einander zugewandten Seiten der Felgen (10) auf die Radachsen (11) die Lagerflächen abdichtende Dichtringe (13) aufgesetzt. Jeder Dichtring (13) weist ein ringförmiges Mittelteil (13a) mit einer umlaufenden Innenwulst auf, die in eine Nut der Radbuchse (12) oder der Felge (10) eingreift. Der Dichtring (13) weist außerdem an der der Lagerfläche abgewandten äußeren Seite einen hohl ausgebildeten Dichtkegel (13b) auf. Durch die Dichtringe werden die Lagerstellen zumindest an der gefährdeten Innenseite wirksam gegen das Eindringen von Staub und Schmutzpartikeln sowie von Feuchtigkeit geschützt. Da die Lagerungen sauber bleiben, wird ein erhöhter Abrieb der Radachsen und der Radbuchsen vermieden.

Das Kinderwagen-Fahrgestell ist für alle Bauarten von Kinderwagen geeignet.

## Beschreibung

Die Erfindung betrifft ein Kinderwagen-Fahrgestell mit zwei parallel und im Abstand zueinander stehenden Radachsen, auf denen in den Endbereichen die Laufräder frei drehbar gelagert sind, wobei ggfs. in Bohrungen der Felgen Lagerteile eingesetzt sind.

Das in Rede stehende Kinderwagen-Fahrgestell ist für alle Bauarten von Kinderwagen geeignet. Die in die Felgen der Laufräder eingesetzten Lagerteile sind üblicherweise Radbuchsen, die aus einem Kunststoff gefertigt sind. Die Sicherung der Räder erfolgt durch ein Sicherungselement, üblicherweise in Form einer Feder. An den Außenseiten, daß heißt an den einander abgewandten Seiten sind an die Feigen noch Deckel angesetzt, deren äußere Ränder die Radbuchsen übergreifen, so daß von dieser Seite aus ein gewisser Schutz gegen das Eindringen von Schmutz und Feuchtigkeit in die Lagerstellen gegeben ist. An den einander zugewandten, inneren Seiten sind die Lagerstellen jedoch ungeschützt. Dies führt dazu, daß Schmutzpartikel und Feuchtigkeit in die Lagerstellen gelangen. Dies führt zu einer erhöhten Reibung, so daß im Laufe der Zeit die Lagerung ein extrem großes Spiel hat.

Der Erfindung liegt die Aufgabe zugrunde, ein Kinderwagen-Fahrgestell der eingangs näher beschriebenen Art so auszubilden, daß die Lagerungen wirksam gegen das Eindringen von Staub- und Schmutzpartikeln von Feuchtigkeit geschützt sind.

Die gestellt Aufgabe wird gelöst, indem zumindest an den inneren, einander zugewandten Seiten auf die Radachsen die Lagerflächen abdichtende Dichtringe aufgesetzt sind.

Durch eine entsprechende Auslegung des Dichtringes wird nunmehr jede Lagerstelle des Kinderwagens wenigstens an der gefährdeten Innenseite wirksam das Eindringen von Staub- und Schmutzpartikeln sowie von Feuchtigkeit geschützt. Da die Lagerungen nunmehr sauber bleiben, wird ein erhöhter Abrieb der Radachsen und der Radbuchsen vermieden. Dadurch ist es auch noch möglich, die Durchmesser der Radachsen entsprechend zu senken. Obwohl schon eine wesentliche Verbesserung erzielt wird, wenn die Lagerungen an den inneren Seiten durch die Dichtringe geschützt sind, wird eine optimale Abdichtung erreicht, wenn beidseitig einer Radfelge bzw. der Lagerelemente Dichtringe vorgesehen sind. Die Dichtringe werden aus den üblichen Materialien gefertigt. Da es sich um ein Massenprodukt handelt, werden die Herstellkosten für das Kinderwagen-Fahrgestell nur unwesentlich erhöht.

Für die optimale Auslegung des Dichtringes ist vorgesehen, daß dieser ein ringförmiges Mittelteil mit einer umlaufenden Innenwulst aufweist, die in eine Nut der Lager-buchse oder in eine Nut der Radbuchse oder der Felge eingreift. Zur Abdichtung des Dichtringes gegenüber der Radachse ist vorgesehen, daß jeder Dichtring an der dem Lagerelement abgewandten Seite einen hohl ausgebildeten Dichtkegel aufweist. Wenn der Dichtring so ausgelegt ist, daß die Dichtfläche mit einer bestimmten Vorspannung gegen die Radachse gepreßt wird, ist auch noch eine optimale Dichtwirkung gegeben, wenn der Dichtring einem Verschleiß unterlegen ist. Eine optimale Abdichtung des Lagerelementes wird erreicht, wenn der Dichtring an der dem Lagerelement zugewandten Seite einen ringförmigen Dichtansatz aufweist. Dadurch wird die Fuge zwischen der Felge und der Radbuchse optimal abgedichtet, da der Durchmesser des Dichtansatzes größer ist als der Außendurchmesser der Radbuchse. Dieser Dichtansatz ist dann an dem ringförmigen Mittelteil angeformt. Das Durchmesserverhältnis dieses Dichtansatzes ist kleiner als die des ringförmigen Mittelteils.

Anhand der beiliegenden Zeichnung wird die Erfindung noch näher erläutert.

Es zeigt:

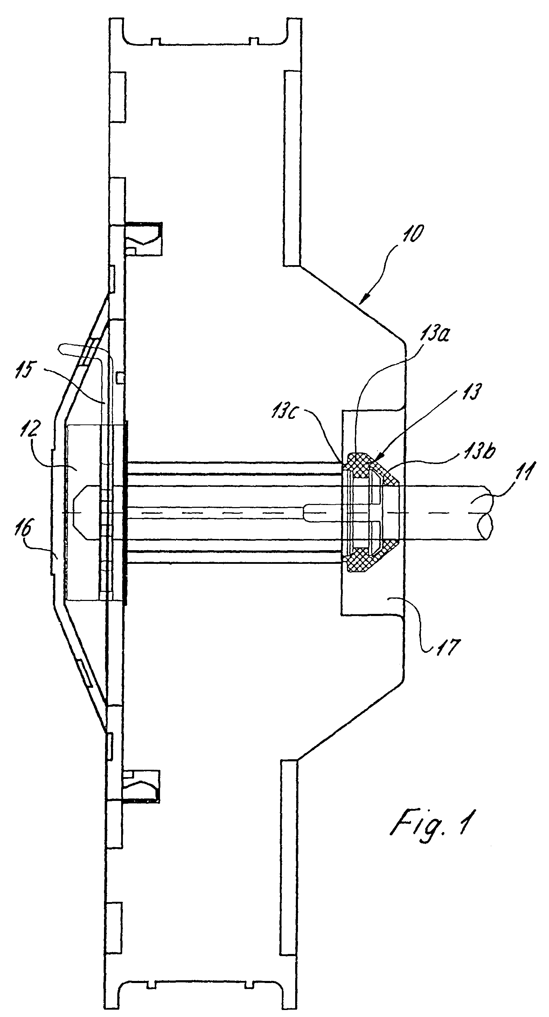

- Figur 1: die Lagerung einer Feige eines Laufrades des erfindungsgemäßen Kinderwagen-Fahrgestelles.

Aus Darstellungsgründen ist in der Figur 1 lediglich die Lagerung der Feige 10 auf der Radachse 11 dargestellt. Auf die Felge 10 wird ein nicht dargestellter Reifen aufgezogen. In die Bohrung der Feige 10 wird ein Lagerelement in Form einer Radbuchse 12 fest eingesetzt. Im dargestellten Ausführungsbeispiel ist die Lagerstelle durch einen einzigen Dichtring 13 abgedichtet, der an der Innenseite der Feige angeordnet ist. Demzufolge sind bei einem Kinderwagen-Fahrgestell die Dichtringe 13 an den einander zugewandten Seiten angeordnet. Der Dichtring 13 besteht aus einem ringförmigen Mittelteil 13 a, einem äußeren hohl ausgebildeten Dichtkegel 13 b und einem inneren, der Radbuchse 12 zugewandten Dichtansatz 13 c, dessen Außen- und Innendurchmesser kleiner sind als die des ringförmigen Mittelteils 13 a. Der Dichtansatz 13 c übergreift jedoch die Radbuchse 12, so daß eine optimale Dichtwirkung gegeben ist. Das ringförmige Mittelteil 13 a greift in eine Nut der Radbuchse 12 ein. Die Sicherung gegen ein axiales Verschieben erfolgt durch ein Federelement 15, dessen freies Ende abgewinkelt ist und eine Durchbrechung eines Deckels 16 durchdringt, der an der Radachse 11 in nicht näher erläuterter Weise festgelegt ist.

Im Gegensatz zu der dargestellten Ausführung ist es zur äußerst optimalen Abdichtung der Lagerstelle jedes Laufrades auch noch möglich, an der äußeren, dem Deckel 16 zugewandten Seite eine Dichtung auf die Radachse 11 aufzusetzen. Die Erfindung ist nicht auf das dargestellte Ausführungsbeispiel beschränkt. Wesentlich ist der Einsatz von wenigstens einer Dichtung für jedes Laufrad. Im dargestellten Ausführungsbeispiel ist der Dichtring 13 in einer Aussparung 17 der Felge 10 angeordnet.

## Patentansprüche

1. Kinderwagen-Fahrgestell mit zwei parallel und im Abstand zueinander stehenden Radachsen, aufdenen in den Endbereichen die Laufräder frei drehbar gelagen sind, wobei ggfs. in Bohrungen der Feigen Lagerteile eingesetzt sind, **dadurch gekennzeichnet, daß** zumindest an den inneren, einander zugewandten Seiten der Feigen (10) auf die Radachsen (11) die Lagerflächen abdichtende Dichtringe (13) aufgesetzt sind.

2. Kinderwagen-Fahrgestell nach Anspruch 1, **dadurch gekennzeichnet, daß** jeder Dichtring (13) ein ringförmiges Mittelteil (13 a) mit einer umlaufenden Innenwulst aufweist, die in eine Nut der Radbuchse (12) oder der Feige (10) eingreift.

3. Kinderwagen-Fahrgestell nach Anspruch 2, **dadurch gekennzeichnet, daß** der Dichtring (13) an der der Lagefläche abgewandten äußeren Seite einen hohl ausgebildeten Dichtkegel (13 b) aufweist.

4. Kinderwagen-Fahrgestell nach Anspruch 2 oder 3, **dadurch gekennzeichnet**, **daß** der Dichtring (13) an der der Lagerfläche zugewandten inneren Seite einen ringförmigen Dichtansatz (13 c) aufweist.

5. Kinderwagen-Fahrgestell nach einem oder mehreren der vorhergehenden Ansprüche 1 bis 4, **dadurch gekennzeichnet, daß** das Durchmesserverhältnis des Dichtansatzes (13 c) kleiner ist als das des ringförmigen Mittelteils (13 a) des Dichtringes (13).
